# EUROPEAN PATENT SPECIFICATION

(11) **EP 0 914 744 B1**
(45) Date of publication and mention of the grant of the patent: **21.05.2003**
(21) Application number: 97926942.0
(22) Date of filing: 25.06.1997
(51) Int. Cl.: H04N 7/173

(54) **DIRECT BROADCASTING SATELLITE ARCHITECTURE FOR VIDEO-ON-DEMAND AND INTERACTIVE SERVICES**
ARCHITEKTUR FÜR DIREKTÜBERTRAGUNGSSATELLITEN MIT VIDEO-AUF-ANFRAGE UND INTERAKTIVEN DIENSTEN
ARCHITECTURE DE RADIODIFFUSION DIRECTE PAR SATELLITE POUR SERVICES VIDEO A LA DEMANDE ET SERVICES INTERACTIFS

(30) Priority: 25.06.1996 US 20405 P
(43) Date of publication of application: 12.05.1999
(73) Proprietor: Vistar Telecommunications Inc., Ottawa, Ontario K1G 3J4 (CA)
(72) Inventor: ROSCOE, Orest, Nepean, Ontario K2H 7C8 (CA); ZULIANI, Michael, Ottawa, Ontario K1J 8W9 (CA); BREITHAUPT, Robert, W., Ottawa, Ontario K1S 2S2 (CA)
(74) Representative: McLean, Robert Andreas
(86) International application number: CA9700444
(87) International publication number: WO97050250

(56) References cited:
- WO-A-95/04431
- K. HARDER: "DIGITALES FERNSEHEN UND MULTIMEDIA BEGRIFFE, TECHNOLOGISCHE PROBLEME, PERSPEKTIVEN" FERNSEH UND KINOTECHNIK, vol. 50, no. 1, 1 January 1996, HEIDELBERG, DE, pages 41-45, XP000555569
- HIRTZ G ET AL: "OPEN TV: BETRIEBSSYSTEM FUER INTERAKTIVES FERNSEHEN" FERNSEH UND KINOTECHNIK, vol. 50, no. 3, 1 March 1996, HEIDELBERG, DE, pages 84-89, XP000581417

## Description

This invention relates generally to near video on demand (VOD), and more particularly relates to a system and method of providing personalized near video on demand and interactive communications services.

Direct broadcasting satellite technology as usually conceived is suitable for delivering large numbers of video channels over wide geographic areas on a point-to-multipoint basis. It is fundamentally a one-way medium, with a geostationary satellite broadcasting to small, low cost, individually addressable home receivers. Signals are encrypted, with decryption enabled in subscribing receivers. Digital video compression (DVC)is applied to the video signals to conserve satellite capacity required.

The home receivers comprise an outdoor unit which consists of an antenna and low noise down converter, and an indoor unit. The indoor unit comprises a demodulator and demultiplexor to permit channel selection, a control unit for address decoding and decryption control, an interface control unit accessible with a hand held remote control, and a DVC decoder. The interface control unit enables the user to select channels, display schedule information, carry out user control functions such as parental control channel lockout, and display messages addressed to a particular receiver. It may also have a billing function if it is used to authorize Pay-per-View viewing from a debitable credit account established within it.

A typical example of such as system is described in PCT application no. WO-A-9504 431. This patent application discloses a satellite broadcast system whereby broadcast material can be stored locally at a remote site.

The paper in Communications of the ACM, vol. 35, no. 12 December 1992, USA pages 39-48, XP000334363 S. Loeb, "Architecting Personalized Delivery of Multimedia Information", discloses a general technique for filtering information to cope with information overload, but it does not suggest any means for providing near video demand services without the need for an expanded infrastructure.

Interactive multimedia and VOD services are not normally provided by a DBS system because the medium is one-way and is cost effective for mass distribution, not for services to individuals.

An object of the invention is to address this problem.
According to the present invention there is provided a system for providing at least near video on demand, comprising multimedia server means providing a source of program material; a satellite communications system for broadcasting the program material to a plurality of users; and at least one receiving station comprising antenna means for receiving a plurality of programs in the form of encoded signals from the satellite system; a decoder for decoding said signals; mass storage means coupled to said decoder, for storing at least some of said plurality of programs; and a television set for displaying said programs, wherein :
a) header information relating to each broadcast is stored at a central location;
b) the or each said receiving station includes programmed processor means providing a personal agent implementing rules to determine which of said plurality of programs to store in said mass storage means based on predetermined criteria selected by the user and by accessing said header information from said central location to review broadcast schedules and create a schedule for program storage;
c) it is included means for updating said rules based on said material selected for replay; and
d) it is included a narrowband return link connecting said control station to said multimedia server means to provide interactive services to a user at said receiving station.

This invention provides a system architecture which permits the use of both direct broadcasting satellite (DBS) technology and terrestrial integrated services digital network (ISDN) facilities (or other similar terrestrial narrow band data transmission facilities) to provide interactive multimedia and emulated video-on-demand (VOD) services to residential consumers. Both of these technologies are in place or are being put in place, requiring little or no further investment in basic infrastructure on the part of the respective service providers. A key addition to the architecture is the incorporation of high capacity data storage in the equipment in the home to store DBS delivered video information along with Personal Agent software to assist in the selection of material to be stored, as well as in the provision of this material to the user on an "on-demand" or NVOD basis.

The integrated combination of DBS, terrestrial data transmission facilities such as ISDN, and high capacity data storage permits interactive VOD service to be emulated using satellite delivery. DBS provides the wideband link to the home for broadcast or narrowcast video which can be stored for access by the user on demand. ISDN provides a narrowband link to the home, but it is two-way and suitable for interactive services which are individually addressable. In combination with downloaded stored video information, this can provide full interactive multimedia capability to the home.

The Personal Agent software assists in the selection of broadcast video and digital information material to be stored, at the request of the user, and on the basis of the user's interest profile which he/she will provide. In many instances the user will select in advance the material desired to be saved for later use. The Personal Agent software is intended to automate the process by saving all material which matches the user's interest profile for subsequent review/viewing by the user and his/her subsequent decision to retain or discard. Particular programming of interest would be retained for a prescribed period before automatic or user-prompted deletion. The use of this intelligent agent in combination with the other system components will effectively provide an NVOD capability.

All agents have a repertoire that incorporates rules and thereby determines actions. Intelligent agents also incorporate learning. By providing a learning function, an intelligent agent can update its rules based on outcomes of previous decisions in an attempt to improve a quality of service. An agent acts on behalf of an individual and performs tasks requested by or for the benefit of that individual.

The personal agent software described herein can be implemented in any of a number of ways. Such an agent searches available broadcast material for that material which is of interest to the individual. Material of interest is defined by the individual; the agent is capable of learning, and can improve searches through feedback regarding previously retrieved broadcasts.

Initially, prior to performing a search, an agent is provided with preferences in the form of parameters or limitations by which to confine or direct a search. Parameters may include topics or subject matter, directors, producers, stars, ratings, company, or title. Limitations may include rating based limitations on access for those under a certain age, it may include filters to ignore eligible broadcasts covering certain material or containing certain references, it may restrict the eligible broadcasts by company, producer, director, actor etc. The agent will adhere to the provided preferences. Alternatively, when the agent is capable of learning and will modify the search parameters within the context of previous broadcasts that have been rated by the individual.

Each broadcast may be provided with header information containing a sufficient amount of information to allow personal agents to review the material to be broadcast and to apply rules to select the programs for storage. Such an embodiment is limited in several ways. A program may last longer than a single time slot and may, if stored, prevent storage of later, more interesting programs. Further, the agent would be incapable of creating a schedule in advance, which an individual can review. Finally, the agent must constantly monitor all broadcast signals and communicate all decisions in a storage medium of the individual.

Header information is therefore stored in at least a central location in whole or in part and retrieved from the at least a location by a personal agent in order to review broadcast schedules, apply rules, and create a schedule for program storage. Such a schedule may span a predetermined time or may be determined by the agent's prior experience with rearranging schedules. Personal agents are notified of changes in the broadcast schedules to ensure that stored programs are desirable.

A personal agent is informed of user preference changes in the form of changes to parameters or limitations. The changes may become effective at some future time, in which case the agent will schedule the changes to occur at that time, or they may be effective immediately and retroactively. In the later case, the agent will review the existing program storage schedule in order to apply the new parameters and limitations. Changes in weighting of different parameters and limitations result in the agent contacting at least a central location, re-reviewing broadcast schedules, and re-creating the schedule for program storage. Further, when time permits, a schedule for program storage is provided to the individual to review prior to implementation. Such review allows the individual to arbitrate between simultaneous broadcasts and to review available programs meeting the parameters and limitations set out in the individual's preferences. Further, such review provides valuable information to the agent when it is capable of learning.

The invention further provides a method of providing at least near video on demand, comprising the steps of providing a source of program material; broadcasting the program material to a plurality of users over a satellite communications system; receiving said material at a receiving station in the form of encoded signals from the satellite system; decoding said signals; storing at least some of said plurality of programs in a mass storage means at said receiving station; and displaying program material on a television set, characterized in that said method further includes the steps of
i) storing header information relating to each broadcast at a central location;
ii) providing at the or each said receiving station a programmed processor means that provides a personal agent implementing rules to determine which of said plurality of programs to store in said mass storage means based on predetermined criteria selected by the user and by accessing said header information from said central location to review broadcast schedules and create a schedule for program storage;
iii) selecting material for replay ;
iv) updating said rules on the basis of said material selected for replay, and when appropriate establishing communication between said receiving station and said source of program material over a narrowband return link to provide interactive services to a user at said receiving station.

The invention also provides a receiving station for providing near video on demand services, comprising antenna means for receiving a plurality of programs in the form of encoded signals from a satellite system; a decoder for decoding said signals; mass storage means coupled to said decoder, for storing at least some of said plurality of programs; and a television set for displaying program material, characterized in that said receiving station further comprises:
a) programmed processor means providing a personal agent implementing rules to determine which of said plurality of programs to store in said mass storage means based on predetermined criteria selected by the user and adapted to access header information relating to said broadcasts from a central location to review broadcast schedules and create a schedule for program storage;
b) means for selecting material for replay from said mass storage means;
c) means for updating said rules based on said material selected for replay; and
d) a narrowband return link connecting said receiving station to said multimedia server means to provide interactive services to a user at said receiving station.

The invention will now be described in more detail, by way of example only, with reference to the accompanying drawings, in which:-
Figure 1 is a block diagram of a NVOD system in accordance with the invention; and
Figure 2 illustrates one embodiment of a personal agent for use with the system.

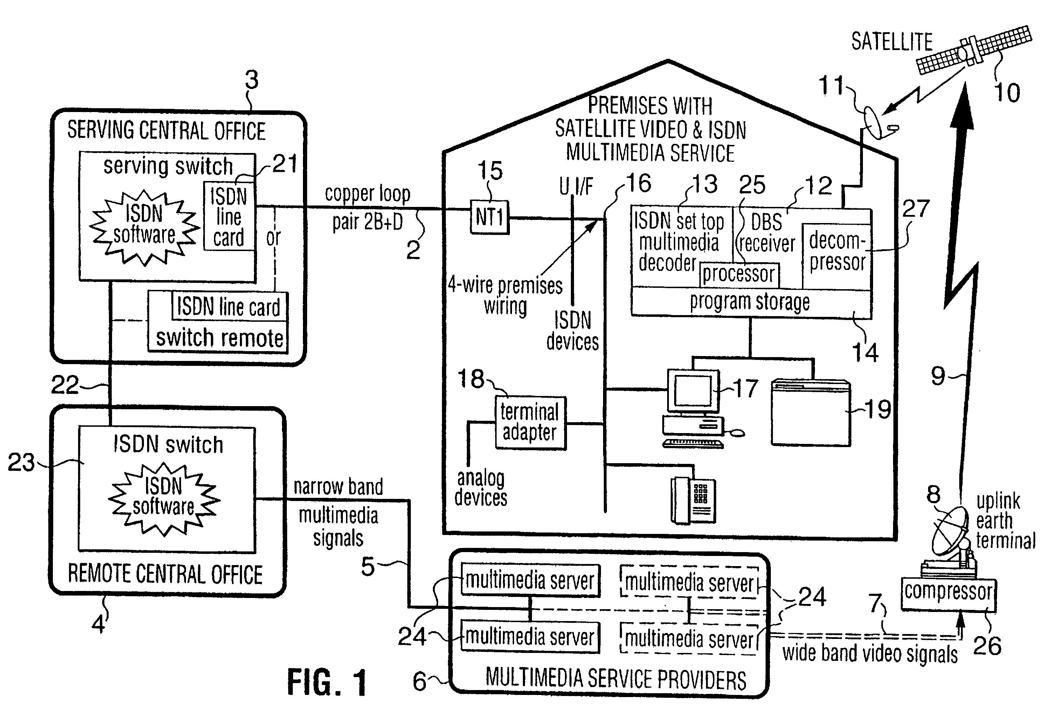

In Figure 1, a home 1 communicates over an ISDN 2B+D link 2 with a local central office 3 in turn connected to a remote central office 4. The remote central office is connected over a narrow band link 5 carrying multimedia signals to multimedia service providers 6. The service providers 6 are connected over a wideband video link 7 to a satellite base station 8, which sends signals over uplink 9 to satellite 10 for broadcast to home antenna 11.

The antenna 11 is connected to a conventional DBS receiver 12 associated with an ISDN decoder 13 and program storage device 14.

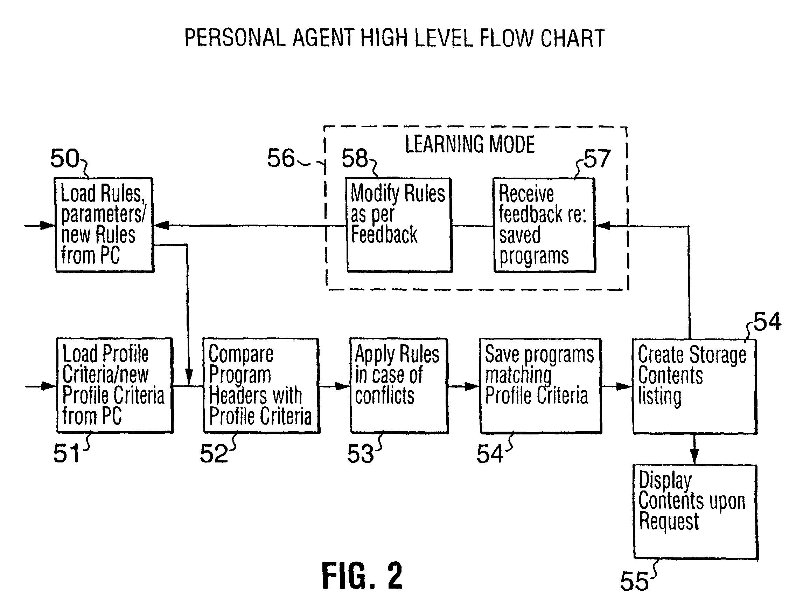

Loop terminating device 15 is connected to the ISDN link and connected via bus 16 to the ISDN set top decoder 13, computer 17, and terminal adapter 18, which may be connected to analog devices (not shown). The program storage device 14 is also connected to the computer 17 and television set 19. Processor 25, associated with the DBS receiver 12, is programmed to permit the user to determine what material will be stored in accordance with user selected criteria. The processor 25 includes personal agent software for this purpose, which is described in more detail with reference to Figure 2.

The local central office 3 comprises a server switch 20 with an ISDN line card connect to the ISDN link 2. The local server switch 20 is connected over trunk 22 to the ISDN switch 23 in the remote central office 4.

The multimedia service provider 6 consists of a number of multimedia servers 24 each storing multimedia material for distribution to customers. Typical multimedia services include Network TV; Home Banking; Specialty TV; Financial Services; Pay TV; Reservations-theater, restaurant, etc; Pay per View Movies; Travel Reservations; Pay per View Special Events; Community Services; Home Shopping; Health Services; Educational Courses; Services Directory; Training Courses; Library Browsing; "How To" Programs; Computer Networking; Hobbies; Electronic Mail; Games; Computer Bulletin Boards; Audio Stories, Books; Facsimile; Music; Telecommuting; Videophone; and Information Services

The service providers 6 make use of both DBS and terrestrial data transmission technology, such as ISDN technology to provide a wide range of multimedia services to their customers. The multimedia servers 24 are used to originate the services. Wide band, video signals are transmitted via the DBS system including satellite 10, while narrow band signals falling within the capability of ISDN are transmitted using ISDN network facilities 20, 23. Some services comprise both wide band and narrow band signals and use a combination of DBS and ISDN or a similar narrow band data transmission technology.

The central offices 3, 4 and associated two-way ISDN links provide a narrow band return path to the multimedia servers 24 to permit interactivity and also to carry narrowband material, such as billing information, that does not justify the use of the wideband satellite link.

Video transmitted on the DBS system may be viewed in real time in the conventional manner on television set 19 or it may be recorded by the program storage device 14 incorporated in the DBS receiver or set-top multimedia decoder for later viewing. Depending on the type of service, the stored video material may be requested directly by the user for display on TV 19 or computer display 17. In this mode, because the video material is stored, the user is be able to search through it to select the portion he/she wished to view, pause, go backward or forward, view frame by frame, or repeat viewing. If the video material is part of an interactive service which includes terrestrially transmitted material, display of the video portion may be controlled from the multimedia server via the terrestrial line.

The program storage device can be associated with either the DBS receiver 12 as shown or it could be a stand alone device. In a preferred embodiment, in a consumer product the indoor unit of the DBS receiver, the multimedia decoder, and the program storage devices are packaged as one set-top unit and incorporate an infrared remote control device. Residential consumer user equipment includes a TV and a stereo sound system.

All of the residential premises equipment is presently commercially available on a stand-alone basis or readily adaptable by one skilled in the art from existing equipment. The set-top multimedia decoder 13 falls into the latter category. and can most easily realized by adapting a DBS or cable TV set-top device. This invention integrates the set-top unit functions of the DBS receiver and the multimedia decoder with high capacity data storage, and incorporates all of the required functionality in appropriate software to emulate interactive VOD and other multimedia services. The Personal Agent software is included in the set-top box software modification.

A variety of data storage technologies are applicable for the program storage device 14 . These include magnetic tape, magnetic disc, magneto-optic disc and optical storage. Capacity for storing four hours of DVC video information is considered to be the minimum capacity required, with 10 to 20 hours preferred. Other desired attributes of the storage technology applied include virtually instantaneous access, certainly within seconds, and a capability to record information at higher than real time speeds, by a factor of 10 to 20. This permits the option of rapid downloading of information as well as real time recording. A combination of storage technologies may be applied to achieve the desired set of attributes. For example, magnetic tape may provide the high capacity and be used in an archival storage mode, with magnetic disc providing the rapid access by transferring information desired for current use from tape to disc.

Optical data storage technologies hold out the promise of providing high capacity, hundreds or thousands of gigabytes, rapid random access, and very high input and output transfer rates. However, they are not yet commercially available, although they are forecast to be within the next decade or so.

The type of equipment required by multimedia service provider 6 depends upon the type of service being provided. For example, a pay per view movie service or any other video information service requires archival storage, which can be tape or video disc, and transmission facilities to the DBS uplink terminal. In accordance with this invention. requests for particular movies are received via the terrestrial data facility, which is also used to provide the return information to the requester concerning transmission schedule for the requested movie.

An interactive educational or training service also uses a video server and augments this with a computer for multimedia graphics, text, and audio material as well as for interactive conduct of the course being given. Again all but the video information is communicated with the user via the terrestrial data facility.

Some multimedia services such as home banking, financial services, electronic mail, reservation services, etc., may not have any associated video information and may require only the terrestrial data portion of the architecture described here for connection to the user. Billing associated with any of the services being provided would also require only the data facility.

Formatting of multimedia material may take advantage of the maximum transmission capacity of the terrestrial data link. Assuming an ISDN basic rate (2B+D) with a maximum throughput of 144 kb/s, the use of a buffering technique permits the transmission of material which exceeds this rate for short periods of time if it is time averaged with material which falls below this rate, for example, audio or text. Thus even short video clips or partial screen full motion displays exceeding 144 kb/s may be transmitted via ISDN and not require transmission via DBS. This offers further flexibility in configuring multimedia services.

The terrestrial data portion of the architecture is that provided as a standard service offering by the telephone companies, such as ISDN. It involves switches equipped with ISDN software in the telephone company central offices, ISDN line cards to serve individual subscribers, and interconnection for ISDN service between central offices. If the subscriber's central office is not equipped with ISDN software and hardware, then a remote unit 23 connected to a distant ISDN switch may be used as shown in Figure 1. The existing twisted copper pair loop 2 to the subscriber capable of delivering ISDN basic rate service (2B+D) is an adequate connection. Dedicated lines may be required between multimedia service providers and the ISDN network.

The DBS portion of the architecture described herein is that typically associated with a DBS service. It comprises a high powered satellite 10 transmitting signals capable of being received with small antennas, usually less than a metre in diameter. One or more uplink earth stations 8 are used to feed the satellite. DVC (Digital Video Compression) is used at the uplink earth stations to compress the video signals to conserve spectrum and satellite power and thus to make more efficient use of satellite capacity. For this purpose uplink station has a compressor unit 26 and the home 1 is provided with a decompressor 27. Any suitable video compression software can be employed. Direct satellite broadcasting is usually carried out at Ku band frequencies, either in the Broadcasting Satellite Service (BSS) band or the Fixed Satellite Service (FSS) band, but may also be carried out in other satellite service frequency bands. When not specifically in the BSS band, direct satellite broadcasting is often described as direct-to-home (DTH) satellite service.

One deviation from a nominal DBS system possible with the architecture described herein is to transmit compressed video at a higher than real time viewing rate and to record the signal for subsequent viewing. Thus a movie may be sent in a few minutes rather than its typical normal time of two hours. Some of the capacity of the DBS system within the architecture described could be reserved for such a high speed down loading service.

The personal agent implemented on the processor 25 is shown in more detail in Figure 2. The personal agent includes a routine 50 which loads rules parameters or new rules governing the operation of the system from the personal computer 17. These can be input into the PC 17 by the user. Similarly routine 51 loads profile criteria or new profile criteria relating, for example, to the particular programs or type of programs that the user wants to access. Routine 52 compares the criteria and rules received from routines 50, 51 with the program headers associated with the received material. These can be added by the broadcasters or derived from the broadcast material using intelligent software responsive to program content.

In response to the previous routines the personal agent saves programs matching the profile criteria at 54 and creates a storage contents listing in routine 54. Routine 55 displays the contents listing upon request.

Block 56 represents the learning mode which enables the agent to learn what type of programs the user is interested in based on past experience. Routine 57 receives feedback relating to saved programs and passes this information to routine 58 which passes it back to routine 50 that is responsible for loading the rules parameters.

By incorporating high capacity data storage with both DBS and terrestrial data transmission technologies and using all three components combined in an innovative fashion with a Personal Agent, VOD or NVOD services can be emulated in residential premises without further investment in network infrastructure. Thus this invention can result in the deferral or avoidance of billions of dollars of investment in fibre optic or two-way coaxial cable plant.

## Claims

1. A system for providing at least near video on demand, comprising multimedia server means (24) providing a source of program material; a satellite communications system (10) for broadcasting the program material to a plurality of users; and at least one receiving station comprising antenna means (11) for receiving a plurality of programs in the form of encoded signals from the satellite system (10); a decoder (27) for decoding said signals; mass storage means (14) coupled to said decoder (27), for storing at least some of said plurality of programs; and a television set (19) for displaying said programs,
**characterized in that**:
a) header information relating to each broadcast is stored at a central location (3,4);
b) the or each said receiving station includes programmed processor means (25) providing a personal agent (50-58) implementing rules to determine which of said plurality of programs to store in said mass storage means (14) based on predetermined criteria selected by the user and by accessing said header information from said central location (3,4) to review broadcast schedules and create a schedule for program storage;
c) it includes means for updating said rules based on said material selected for replay; and
d) it includes a narrowband return link (2,5) connecting said control station to said multimedia server means (24) to provide interactive services to a user at said receiving station.

2. A system as claimed in claim 1, wherein said narrowband link (2,5) is a terrestrial link between said multimedia server means and said at least one receiving station.

3. A system as claimed in claim 2, wherein said terrestrial link is an ISDN link.

4. A system as claimed in claim 1 or 2, wherein said decoder (27) is in the form of a TV set-top multimedia decoder.

5. A system as claimed in any one of claims 1 to 4, wherein said at least one receiving unit includes a DBS receiver (12).

6. A system as claimed in claim 5, wherein said personal agent is programmed with user preferences to be used for determining which programs are to be stored.

7. A system as claimed in any one of claims 1 to 6, further comprising means for compressing said program material for broadcast to said at least one receiving station in compressed form.

8. A system as claimed in any one of claims 1 to 7, wherein said receiving station comprises a bus (16) connected to a network terminal adapter (18), and said bus is connected to a computer (17) and said programmed processor means (25).

9. A system as claimed in claim 8, wherein said bus (16) is also connected to said decoder (27) to permit said computer (17) to receive interactive multimedia material over said satellite communications system (10).

10. A method of providing at least near video on demand, comprising the steps of providing a source of program material; broadcasting the program material to a plurality of users over a satellite communications system (10); receiving (11) said material at a receiving station in the form of encoded signals from the satellite system; decoding (27) said signals; storing at least some of said plurality of programs in a mass storage means (14) at said receiving station; and displaying program material on a television set (19), **characterized in that** said method further includes the steps of:
i) storing header information relating to each broadcast at a central location (3,4);
ii) providing at the or each said receiving station a programmed processor means (25) that provides a personal agent (50-58) implementing rules to determine which of said plurality of programs to store in said mass storage means (14) based on predetermined criteria selected by the user and by accessing said header information from said central location (3,4) to review broadcast schedules and create a schedule for program storage;
iii) selecting material for replay;
iv) updating (56) said rules on the basis of said material selected for replay, and when appropriate establishing communication between said receiving station and said source of program material (24) over a narrowband return link (2,5) to provide interactive services to a user at said receiving station.

11. A method as claimed in claim 10, wherein said narrowband return link (2,5) is a terrestrial link from said at least one receiving station to said source of program material (24).

12. A method as claimed in claims 11 or 12, further comprising compressing (26) said program material for broadcast to said receiving station in compressed form.

13. A method as claimed in any one of claims 10 to 12, further comprising transmitting interactive multimedia material over said satellite communications system (10).

14. A receiving station for providing near video on demand services, comprising antenna means (11) for receiving a plurality of programs in the form of encoded signals from a satellite system (10); a decoder (27) for decoding said signals; mass storage means (14) coupled to said decoder (27), for storing at least some of said plurality of programs; and a television set (19) for displaying program material, **characterized in that** said receiving station further comprises:
a) programmed processor means (25) providing a personal agent (50-58) implementing rules to determine which of said plurality of programs to store in said mass storage means (14) based on predetermined criteria selected by the user and adapted to access header information relating to said broadcasts from a central location (3,4) to review broadcast schedules and create a schedule for program storage;
b) means for selecting material for replay from said mass storage means (14);
c) means for updating (56) said rules based on said material selected for replay; and
d) a narrowband return link (2,5) connecting said receiving station to said multimedia server means (24) to provide interactive services to a user at said receiving station.

## Patentansprüche

1. System zur Bereitstellung mindestens eines Quasi-Video-Dienstes auf Abruf, bestehend aus Multimediaserver-Mitteln (24) als einer Quelle von Programmmaterial; einem Satelliten-Kommunikationssystem (10) zum Rundsenden des Programmmaterials an eine Vielzahl von Benutzern; und mindestens einer Empfangsstation, bestehend aus Antennenmitteln (11) zum Empfang einer Vielzahl von Programmen in der Form von codierten Signalen von dem Satellitensystem (10); einem Decoder (27) zum Decodieren solcher Signale; einem an den Decoder (27) angeschlossenen Massenspeicher (14) zur Speicherung von mindestens einigen der Vielzahl von Programmen; und einem Fernsehgerät (19) zur Anzeige der Programme, **dadurch gekennzeichnet, daß**:
a) die sich auf jedes Rundsenden beziehenden Kopffeld-Informationen in einem Zentralstandort (3, 4) gespeichert sind;
b) die oder jede Empfangsstation einen programmierten Prozessor (25) umfaßt als persönlichen Agenten (50 - 58) zum Ausführen von Regeln für die Bestimmung, welche der Vielzahl von Programmen aufgrund der vom Benutzer vorgewählten Kriterien in dem Massenspeicher (14) zu speichern sind, und zum Zugriff auf die Kopffeld-Informationen von dem Zentralstandort (3, 4), um den Rundfunkplan zu verfolgen und einen Zeitplan für die Programmspeicherung zusammenzustellen;
c) es Mittel zum Aktualisieren der Regeln umfaßt, die sich nach dem zur Wiedergabe gewählten Material richten; und
d) eine Schmalband-Rückverbindung (2, 5) umfaßt, die die Leitstation mit den Multimediaserver-Mitteln (24) verbindet, um dem Benutzer an der Empfangsstation interaktive Dienste zur Verfügung zu stellen.

2. System nach Anspruch 1, **dadurch gekennzeichnet, daß** die Schmalbandverbindung (2, 5) eine terrestrische Verbindung zwischen den Multimediaserver-Mitteln und mindestens einer Empfangsstation darstellt.

3. System nach Anspruch 2, **dadurch gekennzeichnet, daß** die terrestrische Verbindung eine ISDN-Verbindung ist.

4. System nach Anspruch 1 oder 2, **dadurch gekennzeichnet, daß** der Decoder (27) ein Multimediadecoder-Fernsehbeistellgerät ist.

5. System nach einem der Ansprüche 1 bis 4, **dadurch gekennzeichnet, daß** mindestens eine Empfangseinheit einen DBS-Empfänger (12) umfaßt.

6. System nach Anspruch 5, **dadurch gekennzeichnet, daß** der persönliche Agent mit den Benutzerprioritäten programmiert ist, um festzustellen, welche Programme zu speichern sind.

7. System nach einem der Ansprüche 1 bis 6, das femer Mittel zur Komprimierung des Programmmaterials umfaßt, um das Programmmaterial in komprimierter Form an mindestens eine Empfangsstation zu senden.

8. System nach einem der Ansprüche 1 bis 7, **dadurch gekennzeichnet, daß** die Empfangsstation einen an einen Netzwerk-Terminaladapter (18) angeschlossenen Bus (16) umfaßt, und daß der Bus an einen Rechner (17) und an den programmierten Prozessor (25) angeschlossen ist.

9. System nach Anspruch 8, **dadurch gekennzeichnet, daß** der Bus (16) auch an den Decoder (27) angeschlossen ist, um dem Rechner (17) zu ermöglichen, interaktives Multimedia-Material durch das Satelliten-Kommunikationssystem (10) zu empfangen.

10. Verfahren zur Bereitstellung mindestens eines Quasi-Video-Dienstes auf Abruf, bestehend aus der Bereitstellung einer Quelle von Programmmaterial; dem Rundsenden des Programmmaterials an eine Vielzahl von Benutzern durch ein Satelliten-Kommunikationssystem (10); dem Empfang (11) des Materials an einer Empfangsstation in der Form von codierten Signalen von dem Satellitensystem; dem Decodieren (27) von diesen Signalen; der Speicherung von mindestens einigen der Vielzahl von Programmen in einem Massenspeicher (14) in der Empfangsstation; und der Anzeige des Programmmaterials auf einem Fernsehgerät (19), **dadurch gekennzeichnet, daß** das Verfahren ferner aus den folgenden Schritten besteht:
i) der Speicherung der sich auf jedes Rundsenden beziehenden Kopffeld-Informationen in einem Zentralstandort (3, 4);
ii) der Bereitstellung eines programmierten Prozessors (25) an der oder an jeder Empfangsstation mit einem persönlichen Agenten (50 - 58) zum Ausführen von Regeln für die Bestimmung, welche der Vielzahl von Programmen aufgrund der vom Benutzer vorgewählten Kriterien in dem Massenspeicher (14) zu speichern sind, und zum Zugriff auf die Kopffeld-Informationen von dem Zentralstandort (3, 4), um den Rundfunkplan zu verfolgen und einen Zeitplan für die Programmspeicherung zusammenzustellen;
iii) der Auswahl des Materials zur Wiedergabe;
iv) dem Aktualisieren (56) der Regeln aufgrund des zur Wiedergabe ausgewählten Materials, und der entsprechenden Herstellung der Kommunikation zwischen der Empfangsstation und der Programmmaterialquelle (24) durch eine Schmalband-Rückverbindung (2, 5), um dem Benutzer an der Empfangsstation interaktive Dienste zur Verfügung zu stellen.

11. Verfahren nach Anspruch 10, **dadurch gekennzeichnet, daß** die Schmalbandverbindung (2, 5) eine terrestrische Verbindung zwischen mindestens einer Empfangsstation und der Programmmaterialquelle (24) ist.

12. Verfahren nach Anspruch 11 oder 12, das ferner die Komprimierung (26) des Programmmaterials einschließt, um das Programmmaterial in komprimierter Form an die Empfangsstation zu senden.

13. Verfahren nach einem der Ansprüche 10 bis 12, das ferner das Übertragen von interaktivem Multimedia-Material durch das Satelliten-Kommunikationssystem (10) umfaßt.

14. Empfangsstation zur Bereitstellung eines Quasi-Video-Dienstes auf Abruf, bestehend aus Antennenmitteln (11) zum Empfang einer Vielzahl von Programmen in der Form von codierten Signalen aus dem Satellitensystem (10); einem Decoder (27) zum Decodieren dieser Signale; einem an den Decoder (27) angeschlossenen Massenspeicher (14) zur Speicherung von mindestens einigen der Vielzahl von Programmen; und einem Fernsehgerät (19) zur Anzeige des Programmmaterials, **dadurch gekennzeichnet, daß** die Empfangsstation ferner aus
a) einem programmierten Prozessor (25) als persönlichem Agenten (50 - 58) zum Ausführen von Regeln für die Bestimmung, welche der Vielzahl von Programmen aufgrund der vom Benutzer vorgewählten Kriterien in dem Massenspeicher (14) zu speichern sind, und zum Zugriff auf die sich auf das Rundsenden beziehenden Kopffeld-Informationen in einem Zentralstandort (3, 4), um den Rundfunkplan zu verfolgen und einen Zeitplan für die Programmspeicherung zusammenzustellen;
b) Mitteln zur Auswahl des Materials zur Wiedergabe aus dem Massenspeicher (14);
c) Mitteln zum Aktualisieren (56) der Regeln aufgrund des zur Wiedergabe ausgewählten Materials; und
d) einer Schmalband-Rückverbindung (2, 5), die die Empfangsstation mit den Multimediaserver-Mitteln (24) verbindet, um dem Benutzer an der Empfangsstation interaktive Dienste zur Verfügung zu stellen,
besteht.

## Revendications

1. Système servant à fournir au moins une quasi vidéo sur demande, qui comprend un moyen de serveur multimédia (24) fournissant une source de matériaux de programme; un système de communications par satellite (10) pour diffuser les matériaux de programme à une pluralité d'usagers; et au moins une station réceptrice comprenant une antenne (11) pour recevoir une pluralité de programmes sous la forme de signaux encodés du système par satellite (10); un décodeur (27) pour décoder lesdits signaux; un moyen de stockage de masse (14) associé au décodeur (27), pour le stockage d'au moins ladite pluralité des programmes; et un téléviseur (19) pour afficher lesdits programmes, **caractérisé en ce que** :
a) l'information d'en-tête relative à chaque diffusion est stockée à un emplacement central (3,4);
b) la ou chaque station réceptrice comprend un processeur programmé (25) fournissant un agent personnel (50-58) qui met en oeuvre des règles afin de déterminer laquelle des pluralités de programmes stocker dans ledit moyen de stockage de masse (14) sur la base de critères prédéterminés sélectionnés par l'usager et en accédant à ladite information d'en-tête à partir de l'emplacement central (3,4) en vue d'examiner les horaires de diffusion et de créer un horaire pour le stockage des programmes;
c) le système comprend le moyen de mettre à jour lesdites règles sur la base des matériaux sélectionnés aux fins de réexecution; et
d) le système comprend une liaison de retour à bande étroite (2,5) reliant ladite station de contrôle au moyen de serveur multimédia (24) afin de fournir des services interactifs à un usager à ladite station réceptrice.

2. Système selon la revendication 1, **caractérisé en ce que** la liaison à bande étroite (2,5) est une liaison terrestre entre ledit serveur multimédia et au moins une station réceptrice.

3. Système selon la revendication 2, **caractérisé en ce que** ladite liaison terrestre est une liaison RNIS.

4. Système selon la revendication 1 ou 2, **caractérisé en ce que** ledit décodeur (27) a la forme d'un décodeur multimédia de téléviseur.

5. Système selon l'une quelconque des revendications 1 à 4, **caractérisé en ce qu'**au moins une unité réceptrice comprend un récepteur SDD (12).

6. Système selon la revendication 5, **caractérisé en ce que** ledit agent personnel est programmé avec les préférences des usagers, devant être utilisé pour déterminer quels programmes doivent être stockés.

7. Système selon l'une quelconque des revendications 1 à 6, qui comprend aussi le moyen de comprimer lesdits matériaux de programme pour diffusion à au moins une station réceptrice sous forme comprimée.

8. Système selon l'une quelconque des revendications 1 à 7, **caractérisé en ce que** ladite station réceptrice comprend un bus (16) relié à un adaptateur de terminal de réseau (18), et ledit bus est relié à un ordinateur (17) et au processeur programmé (25).

9. Système selon la revendication 8, **caractérisé en ce que** ledit bus (16) est aussi relié au décodeur (27) pour permettre à l'ordinateur (17) de recevoir le matériau multimédia interactif au moyen du système de communications par satellite (10).

10. Méthode de fourniture d'au moins une quasi vidéo sur demande, qui comprend les étapes de fourniture d'une source de matériaux de programme; la diffusion des matériaux de programme à une pluralité d'usagers au moyen d'un système de communications par satellite (10); la réception (11) des matériaux à une station réceptrice sous forme de signaux encodés du système par satellite; le décodage (27) des signaux; le stockage d'au moins en partie la pluralité des programmes dans un moyen de stockage de masse (14) à ladite station réceptrice ; et l'affichage des matériaux de programme au moyen d'un téléviseur (19), **caractérisé en ce que** ladite méthode comprend aussi les étapes suivantes :
i) le stockage d'information d'en-tête relative à chaque diffusion à un emplacement central (3,4);
ii) la fourniture à la ou à chaque station réceptrice d'un processeur programmé (25) qui fournit un agent personnel (50-58) qui met en oeuvre des règles afin de déterminer laquelle des pluralités de programmes stocker dans ledit moyen de stockage de masse (14) sur la base de critères prédéterminés sélectionnés par l'usager et en accédant à ladite information d'en-tête à partir de l'emplacement central (3,4) en vue d'examiner les horaires de diffusion et de créer un horaire pour le stockage des programmes;
iii) la sélection de matériaux aux fins de réexecution; et
iv) la mise à jour (56) des règles sur la base des matériaux sélectionnés aux fins de réexecution, et lorsqu'approprié, l'établissement de la communication entre ladite station réceptrice et ladite source de matériaux de programme (24) au moyen d'une liaison de retour à bande étroite (2,5) afin de fournir des services interactifs à un usager à ladite station réceptrice.

11. Méthode selon la revendication 10, **caractérisée en ce que** la liaison à bande étroite (2,5) est une liaison terrestre entre au moins une station réceptrice et ladite source des matériaux de programme (24).

12. Méthode selon la revendication 11 ou 12, qui comprend aussi la compression (26) desdits matériaux de programme aux fins de diffusion à ladite station réceptrice sous forme comprimée.

13. Méthode selon l'une quelconque des revendications 10 à 12, qui comprend aussi la transmission de matériaux multimédias interactifs au moyen du système de communications par satellite (10).

14. Station réceptrice pour la fourniture des services d'une quasi vidéo sur demande, qui comprend une antenne (11) pour la réception d'une pluralité de programmes sous forme de signaux encodés d'un système par satellite (10); un décodeur (27) pour décoder lesdits signaux; un moyen de stockage de masse (14) associé au décodeur (27), pour le stockage d'au moins en partie ladite pluralité des programmes; et un téléviseur (19) pour afficher lesdits matériaux de programme, **caractérisée en ce que** la station réceptrice comprend aussi :
a) un processeur programmé (25) fournissant un agent personnel (50-58) qui met en oeuvre des règles afin de déterminer laquelle des pluralités de programmes stocker dans ledit moyen de stockage de masse (14) sur la base de critères prédéterminés sélectionnés par l'usager et adapté pour accéder à l'information d'en-tête reliée aux diffusions d'un emplacement central (3,4) en vue d'examiner les horaires de diffusion et de créer un horaire pour le stockage des programmes;
b) le moyen de sélectionner les matériaux aux fins de répétition du moyen de stockage de masse (14);
c) le moyen de mettre à jour (56) lesdites règles sur la base des matériaux sélectionnés aux fins de répétition; et
d) une liaison de retour à bande étroite (2,5) reliant ladite station réceptrice au serveur multimédia (24) afin de fournir des services interactifs à un usager à ladite station réceptrice.
